# EUROPEAN PATENT SPECIFICATION

(11) **EP 1 582 913 B1**
(45) Date of publication and mention of the grant of the patent: **15.08.2012**
(21) Application number: 05006956.6
(22) Date of filing: 30.03.2005
(51) Int. Cl.: G02F 1/13357

(54) **Backlight unit for a liquid crystal television**
Rückbeleuchtungseinheit für Flüssigkristallfernsehen
Unité de retro-éclairage pour télévision à cristaux liquides

(30) Priority: 31.03.2004 JP 2004103457
(43) Date of publication of application: 05.10.2005
(73) Proprietor: Funai Electric Co., Ltd., Daito-shi, Osaka 574-0013 (JP)
(72) Inventor: Oka, Masaharu, Daito-shi Osaka 574-0013 (JP)
(74) Representative: Grünecker, Kinkeldey, Stockmair & Schwanhäusser

(56) References cited:
- US-A- 6 000 982
- PATENT ABSTRACTS OF JAPAN vol. 2002, no. 07, 3 July 2002 (2002-07-03) -& JP 2002 082626 A (SHARP CORP), 22 March 2002 (2002-03-22)
- PATENT ABSTRACTS OF JAPAN vol. 2000, no. 24, 11 May 2001 (2001-05-11) -& JP 2001 194664 A (HITACHI LTD; HITACHI DEVICE ENG CO LTD), 19 July 2001 (2001-07-19)
- PATENT ABSTRACTS OF JAPAN vol. 2003, no. 12, 5 December 2003 (2003-12-05) & JP 2004 287226 A (TAMA ELECTRIC CO LTD), 14 October 2004 (2004-10-14)
- PATENT ABSTRACTS OF JAPAN vol. 1996, no. 02, 29 February 1996 (1996-02-29) & JP 07 270783 A (NEC HOME ELECTRON LTD), 20 October 1995 (1995-10-20)

## Description

### BACKGROUND OF THE INVENTION

### 1. Field of the Invention

The present invention relates to a direct-type backlight unit to illuminate a liquid crystal panel for a liquid crystal television from behind.

### 2. Description of the Related Art

Conventionally, backlight units for liquid crystal panels are mainly used for liquid crystal panels in liquid crystal monitors for personal computers. Accordingly, it is necessary for a liquid crystal panel to have a uniform brightness over the entire display screen. For achieving the brightness uniformity over the entire display screen, a backlight unit of this kind is so designed that the mounting pitch of Cold Cathode Fluorescent Lamps for illuminating the liquid crystal panel from behind is uniform in the vertical direction of the display screen, or that the mounting pitch of the Cold Cathode Fluorescent Lamps at a central portion in the vertical direction of the display screen is longer than that at each end portion in the vertical direction of the display screen as disclosed in Japanese Laid-open Patent Publication Hei 7-270783.

Further, Japanese Laid-open Patent Publication 2002-82626 discloses a backlight unit in which the mounting pitches between adjacent Cold Cathode Fluorescent Lamps in the vertical direction of the display screen gradually increase from a central portion to each end portion in the vertical direction of the display screen for the purpose of reducing power consumption while securing the brightness uniformity over the entire display screen. In order to apply these backlight units to a liquid crystal panel for a 15 inch or larger liquid crystal monitor or liquid crystal television, it is necessary to use six or more straight tube type Cold Cathode Fluorescent Lamps so as to minimize brightness non-uniformity and secure a certain level of brightness.

However, the use of six or more straight tube type Cold Cathode Fluorescent Lamps as described above causes an increase not only in the number of lamps but also in the number of components accompanying the lamps such as inverter circuits and lamp holders. This causes a problem that not only the cost of the entire backlight unit increases, but also the work efficiency in assembling the backlight unit decreases. To solve this problem, a backlight unit for a liquid crystal panel has been proposed which uses U-shaped Cold Cathode Fluorescent Lamps in place of straight tube type Cold Cathode Fluorescent Lamps so as to reduce the number of lamps and the number of components accompanying the lamps, thereby reducing the cost of the entire backlight unit.

However, a mere substitution of the U-shaped Cold Cathode Fluorescent Lamps for the straight tube type Cold Cathode Fluorescent Lamps in a conventional backlight unit for a 15 inch or larger liquid crystal panel requires three or more U-shaped Cold Cathode Fluorescent Lamps, because the conventional backlight unit in the case of a 15 inch or larger liquid crystal panel uses six or more straight tube type Cold Cathode Fluorescent Lamps as described above. This is still an obstacle in reducing the cost of the entire backlight unit.

### SUMMARY OF THE INVENTION

An object of the present invention is to provide such a backlight unit for a liquid crystal television that can reduce the number of Cold Cathode Fluorescent Lamps and the number of accompanying components, thereby reducing the cost of the entire backlight unit and improving the work efficiency in assembling the backlight unit.

The object of the present invention, the above object is solved by the features of claim 1.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is a schematic plan view of a backlight unit according to a first example not being part of the present invention before being mounted on a liquid crystal panel;
FIG. 2 is a schematic cross-sectional view of the backlight unit along A-A line after being mounted on a liquid crystal panel;
FIG. 3 is a graph showing brightness distribution on a display screen using the backlight unit;
FIG. 4 is a graph showing brightness at measurement points in FIG. 3;
FIG. 5 is a schematic plan view of a backlight unit according to a second example not being part of the present invention before being mounted on a liquid crystal panel; and
FIG. 6 is a schematic plan view of a backlight unit according to a preferred embodiment of the present invention before being mounted on a liquid crystal panel.

### DESCRIPTION OF THE PREFERRED EMBODIMENTS

The best modes and preferred embodiment of the present invention will be described hereinafter with reference to the annexed drawings. The specific embodiments described are not intended to cover the entire scope of the present invention, and hence the present invention is not limited to only the specific embodiments.

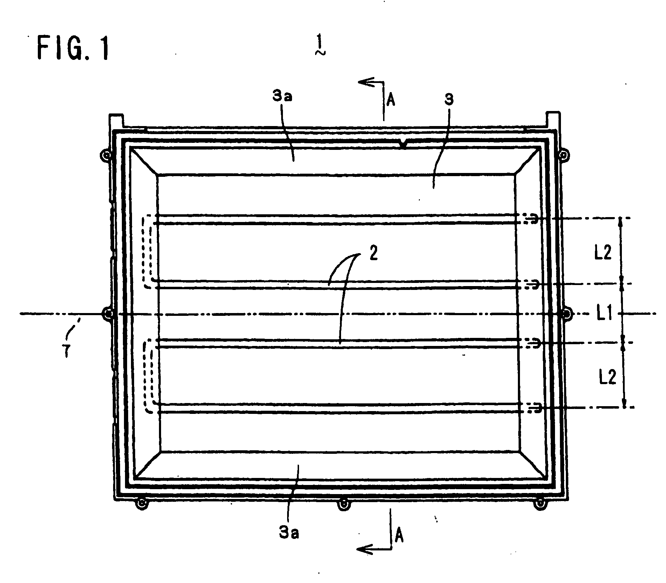

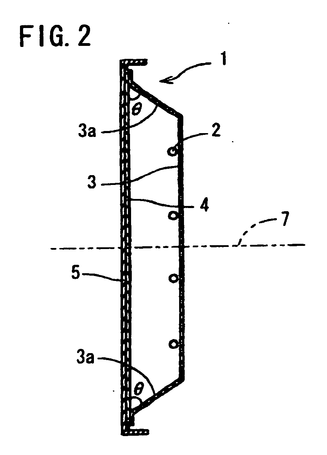

FIG. 1 is a plan view of a backlight unit for a liquid crystal television according to a first example not being part of the present invention (hereafter referred to as simply "backlight unit") before being mounted on a liquid crystal panel, while FIG. 2 is a cross-sectional view of the backlight unit along A-A line in FIG. 1 after being mounted on a liquid crystal panel. This backlight unit 1 is a direct type backlight unit for a liquid crystal television, and comprises: two U-shaped Cold Cathode Fluorescent Lamps 2 to illuminate a liquid crystal panel 5 for a liquid crystal television from behind; a reflector plate 3 placed behind these U-shaped Cold Cathode Fluorescent Lamps 2 to reflect light from the U-shaped Cold Cathode Fluorescent Lamps 2, the reflector plate 3 having a side plate 3a at each side thereof; a diffuser plate 4 to diffuse the direct light from the Cold Cathode Fluorescent Lamps 2 and the reflected light from the reflector plate 3 so as to illuminate forward; and so on. Here, the liquid crystal panel 5 is one for a 15 inch liquid crystal television as an example.

As shown in FIG. 2, each side plate 3a of the reflector plate 3 forms an interior angle *θ* of 30 to 60 degrees with the liquid crystal panel 5. This makes it possible for the backlight unit 1 to secure practical brightness at end portions in the vertical direction of the display screen of the liquid crystal television.

The two U-shaped Cold Cathode Fluorescent Lamps 2 are respectively placed symmetrically up and down with respect to a transverse plane (cross-sectional plane corresponding to a line 7 in FIG. 1 and FIG. 2), as a plane of symmetry, passing through substantially a center in the vertical direction of the display screen of the liquid crystal panel 5 (hereafter referred to as simply "display screen"). As shown in FIG. 1, these two U-shaped Cold Cathode Fluorescent Lamps 2 are mounted in the backlight unit 1 in a manner that the mounting pitch L1 of the two U-shaped Cold Cathode Fluorescent Lamps (center-to-center distance between adjacent parallel tube segments of the two U-shaped Cold Cathode Fluorescent Lamps) is shorter than the center-to-center distance L2 between parallel tube segments in each U-shaped Cold Cathode Fluorescent Lamp 2. Thus, the mounting pitch of the U-shaped Cold Cathode Fluorescent Lamps 2 at a central portion in the vertical direction of the display screen is shorter than the center-to-center distance between parallel tube segments in each U-shaped Cold Cathode Fluorescent Lamp 2. This makes it possible for the display screen to have a higher brightness at its central portion in the vertical direction than at its end portions in the vertical direction. Thereby, the backlight unit 1 for e.g. a 15 inch liquid crystal television can secure practical brightness at a central portion in the vertical direction of the display screen by using two U-shaped Cold Cathode Fluorescent Lamps 2.

In other words, by using the two U-shaped Cold Cathode Fluorescent Lamps 2, the backlight unit 1 for e.g. a 15 inch liquid crystal television sacrifices the brightness at end portions in the vertical direction of the display screen so as to secure practical brightness at a central portion in the vertical direction of the display screen. The reason for sacrificing the brightness at end portions in the vertical direction of the display screen is that in the case of the backlight unit 1 for a liquid crystal television, the low brightness to some extent at end portions in the vertical direction of the display screen does not cause a practical problem as long as the brightness at a central portion in the vertical direction of the display screen can be maintained at a certain level or higher. Rather, for easier viewing, it is preferable in the case of a liquid crystal television to raise the brightness at a central portion and lower the brightness at end portions in the vertical direction of the display screen, just as in the case of a conventional CRT (cathode ray tube) television.

Regarding specific dimensions of the U-shaped Cold Cathode Fluorescent Lamps 2, the diameter of the tube of each U-shaped Cold Cathode Fluorescent Lamp 2 is e.g. 3 mm. The mounting pitch L1 is e.g. 40 mm, while the center-to-center distance L2 is e.g. 45 mm.

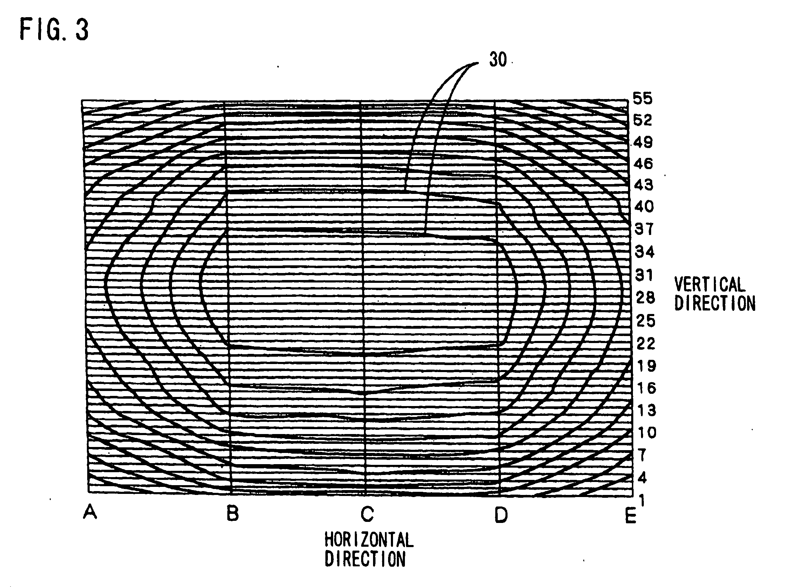

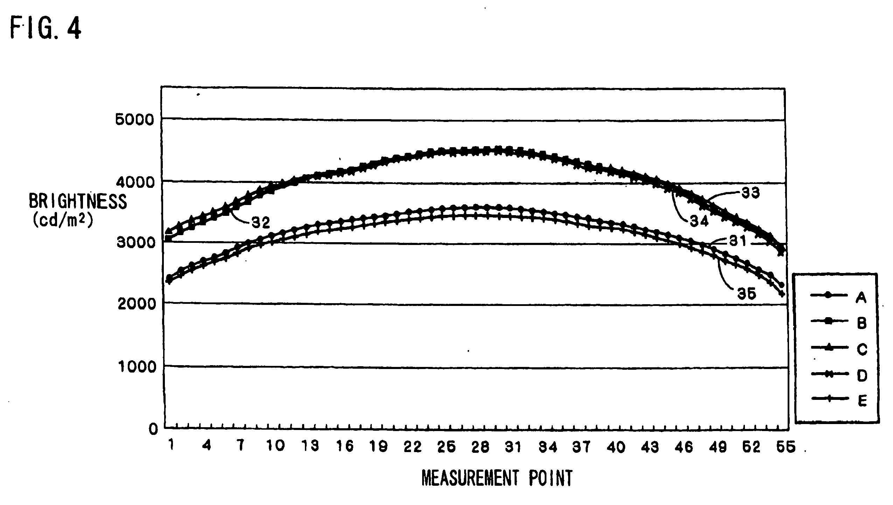

Referring to FIG. 3 and FIG. 4, the difference in brightness between a central portion and end portions in the vertical direction of the display screen using the backlight unit 1 will be described. FIG. 3 shows a brightness distribution on the display screen using the present backlight unit 1, while FIG. 4 shows brightness at measurement points in FIG. 3. In FIG. 3, reference numerals 1 to 55 designate lines representing measurement positions (measurement points) in the vertical direction (up and down direction) on the display screen, while reference symbols A to E designate lines representing measurement positions in the horizontal direction (left and right direction) on the display screen. Further, iso-brightness lines 30 in FIG. 3 are lines that connect points of equal brightness on the display screen. In FIG. 4, reference numerals 31, 32, 33, 34 and 35 designate curves that plot brightness values at the measurement points on vertical lines A, B, C, D and E in FIG. 3, respectively.

As shown in these graphs, the maximum difference in brightness (brightness non-uniformity) between the highest brightness area and the lowest brightness area on the display screen using the backlight unit 1 is 50% or more. This difference in brightness of 50% or more is incomparable to the difference in brightness (about 18%) in the case of the backlight unit disclosed in the above described Japanese Laid-open Patent Publication 2002-82626. According to the present example, it is preferable that the difference between the brightness at the central portion in the vertical direction of the display screen (highest brightness area) and the brightness at each end portion in the vertical direction of the display screen (lowest brightness area) is at least 20%. Thus, the backlight unit 1 causes a large difference in brightness between the central potion and end portions in the vertical direction of the display screen as compared with the conventional backlight unit, thereby making it possible to secure practical brightness at a central portion in the vertical direction of the display screen for e.g. a 15 inch liquid crystal television by using two U-shaped Cold Cathode Fluorescent Lamps 2 having a tube diameter of e.g. 3 mm as described above.

Here, another difference between the present backlight unit 1 and the backlight unit disclosed in the above described Japanese Laid-open Patent Publication 2002-82626 will be described. According to the backlight unit disclosed in Japanese Laid-open Patent Publication 2002-82626, the mounting pitches between adjacent straight tube type Cold Cathode Fluorescent Lamps merely increase, by 1 mm each, from a central portion to each end portion in the vertical direction of the backlight unit. For example, the mounting pitches between adjacent straight tube type Cold Cathode Fluorescent Lamps are 34 mm: 35 mm: 36 mm.

According to the present backlight unit 1, on the other hand, assuming that each U-shaped Cold Cathode Fluorescent Lamp 2 is regarded as comprising two straight tube type Cold Cathode Fluorescent Lamps, the mounting pitch between the two straight tube type Cold Cathode Fluorescent Lamps at the central portion in the vertical direction of the display screen is 40 mm, while the mounting pitch between each of the two straight tube type Cold Cathode Fluorescent Lamp at the central portion in the vertical direction of the display screen and the adjacent outer straight tube type Cold Cathode Fluorescent Lamp (i.e. Cold Cathode Fluorescent Lamp at each end portion in the vertical direction of the display screen) is 45 mm. In other words, the mounting pitch of the straight tube type Cold Cathode Fluorescent Lamps (as regarded) at the central portion in the vertical direction of the display screen is shorter than the mounting pitch of the straight tube type Cold Cathode Fluorescent Lamps (as regarded) at each end portion in the vertical direction of the display screen.

As described above, according to the backlight unit disclosed in Japanese Laid-open Patent Publication 2002-82626, the mounting pitches between adjacent straight tube type Cold Cathode Fluorescent Lamps can be increased, merely by 1 mm each, from a central portion to each end portion in the vertical direction of the backlight unit. This is because the purpose of the technology disclosed in Japanese Laid-open Patent Publication 2002-82626 is to reduce power consumption while maintaining the brightness uniformity over the display screen. On the other hand, according to the present backlight unit 1, the difference between the mounting pitch of Cold Cathode Fluorescent Lamps at the central portion and the mounting pitch (as regarded) of Cold Cathode Fluorescent Lamps at each end portion is enlarged so as to intentionally produce non-uniformity of brightness to some extent, thereby securing practical brightness at a central portion in the vertical direction of the display screen for e.g. a 15 inch liquid crystal television by using two U-shaped Cold Cathode Fluorescent Lamps 2 having a tube diameter of e.g. 3 mm. So, the present backlight unit 1 is very much different from the technology according to Japanese Laid-open Patent Publication 2002-82626.

As described in the foregoing, in the backlight unit according to the first example, the mounting pitch of the two U-shaped Cold Cathode Fluorescent Lamps 2 is made shorter than the center-to-center distance between parallel tube segments in each U-shaped Cold Cathode Fluorescent Lamp 2 to an extent that causes the brightness at a central portion in the vertical direction of the display screen to be higher, by at least 20% and 50% or more at maximum, than the brightness at each end portion in the vertical direction of the display screen. Describing it in another way, assuming that each U-shaped Cold Cathode Fluorescent Lamp 2 is regarded as comprising two straight tube type Cold Cathode Fluorescent Lamps, the mounting pitch of the straight tube type Cold Cathode Fluorescent Lamps at a central portion in the vertical direction of the display screen is shorter than the mounting pitch of the straight tube type Cold Cathode Fluorescent Lamps at each end portion in the vertical direction of the display screen to an extent that causes the brightness at the central portion in the vertical direction of the display screen to be higher by at least 20% than the brightness at each end portion in the vertical direction of the display screen. Thereby, the backlight unit 1 for e.g. a 15 inch liquid crystal television can secure practical brightness at a central portion in the vertical direction of the display screen by using two U-shaped Cold Cathode Fluorescent Lamps 2.

In addition, because each side plate 3a of the reflector plate 3, when mounted on the liquid crystal panel 5, forms the interior angle *θ* of 30 to 60 degrees with the liquid crystal panel 5 as described above, it becomes possible for the backlight unit 1 to secure practical brightness at end portions in the vertical direction of the display screen. Thus, the backlight unit 1 can secure practical brightness over the entire display screen of e.g. a 15 inch liquid crystal television by using two U-shaped Cold Cathode Fluorescent Lamps 2. Accordingly, as compared with a conventional direct type backlight unit for e.g. a 15 inch liquid crystal panel, the backlight unit 1 can reduce the number of Cold Cathode Fluorescent Lamps and the number of accompanying components (e.g. inverter circuits), thereby reducing the cost of the entire backlight unit and improving the work efficiency in assembling the backlight unit.

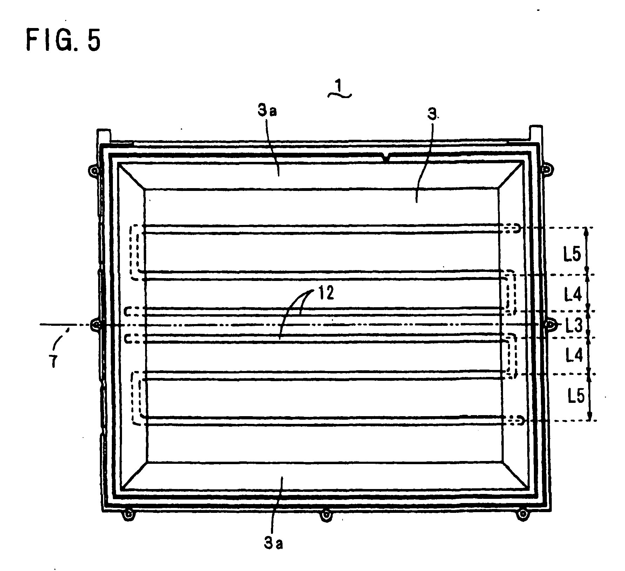

Hereinafter, referring to FIG. 5, a backlight unit according to a second example not being part of the present invention will be described. FIG 5 is a plan view of a backlight unit according to a second example not being part of the present invention before being mounted on a liquid crystal panel. In FIG. 5, like parts as in the first example are designated by like reference numerals. In principle, the backlight unit 1 of the second example is one to be applied to a liquid crystal panel for a 15 inch or larger liquid crystal television. This backlight unit 1 uses two S-shaped Cold Cathode Fluorescent Lamps 12 that are serpentine-shaped Cold Cathode Fluorescent Lamps formed by connecting one straight tube type Cold Cathode Fluorescent Lamp to one U-shaped Cold Cathode Fluorescent Lamp 2 as used for the backlight unit 1 of the first example. These two S-shaped Cold Cathode Fluorescent Lamps are respectively placed symmetrically up and down with respect to a transverse plane (cross-sectional plane corresponding to a line 7 in FIG. 5), as a plane of symmetry, passing through substantially a center in the vertical direction of the display screen.

As shown in FIG. 5, each of the two S-shaped Cold Cathode Fluorescent Lamps is formed such that the center-to-center distance L4 between one pair of adjacent parallel tube segments is shorter than the center-to-center distance L5 between the other pair of adjacent parallel tube segments. Assuming that each of the S-shaped Cold Cathode Fluorescent Lamps 12 is regarded as comprising three straight tube type Cold Cathode Fluorescent Lamps, the S-shaped Cold Cathode Fluorescent Lamps 12 are mounted to the reflector plate 3 such that the mounting pitches between adjacent straight tube type Cold Cathode Fluorescent Lamps (as regarded) gradually decrease from each end portion to the central portion in the vertical direction of the display screen (namely L5 > L4 > L3). Thus, the mounting pitch L3 of the S-shaped Cold Cathode Fluorescent Lamps 12 at a central portion in the vertical direction of the display screen is shorter than the center-to-center distance between adjacent parallel tube segments in each S-shaped Cold Cathode Fluorescent Lamp 12. This makes it possible for the display screen to have a higher brightness at its central portion in the vertical direction than at its end portions in the vertical direction. Thereby, the backlight unit 1 for e.g. a 15 inch or larger liquid crystal television can secure practical brightness at a central portion in the vertical direction of the display screen by using two S-shaped Cold Cathode Fluorescent Lamps 12. In this case, the brightness at a central portion in the vertical direction of the display screen can become higher, by at least 20% and 50% or more at maximum, than the brightness at each end portion in the vertical direction of the display screen.

Similarly as in the backlight unit 1 of the first example, each side plate 3a of the reflector plate 3 in the backlight unit 1 of the second embodiment forms an interior angle *θ* of 30 to 60 degrees with the liquid crystal panel. Thereby, the backlight unit 1 for e.g. a 15 inch or larger liquid crystal television can secure practical brightness at end portions in the vertical direction of the display screen.

As described in the foregoing, in the backlight unit according to the second example, assuming that each of the S-shaped Cold Cathode Fluorescent Lamps 12 is regarded as comprising three straight tube type Cold Cathode Fluorescent Lamps, the mounting pitches between adjacent straight tube type Cold Cathode Fluorescent Lamps (as regarded) gradually decrease from each end portion to the central portion in the vertical direction of the display screen. In addition, each side plate 3a forms the interior angle *θ* of 30 to 60 degrees with the liquid crystal panel. Because of such mounting pitches of the Cold Cathode Fluorescent Lamps and the interior angle formed by each side plate 3a and the liquid crystal panel, the backlight unit 1 can secure practical brightness over the entire display screen of e.g. a 15 inch or larger liquid crystal television by using two S-shaped Cold Cathode Fluorescent Lamps 12. Accordingly, as compared with a conventional backlight unit for e.g. a 15 inch or larger liquid crystal panel, the backlight unit 1 can reduce the number of Cold Cathode Fluorescent Lamps and the number of accompanying components (e.g. inverter circuits), thereby reducing the cost of the entire backlight unit and improving the work efficiency in assembling the backlight unit.

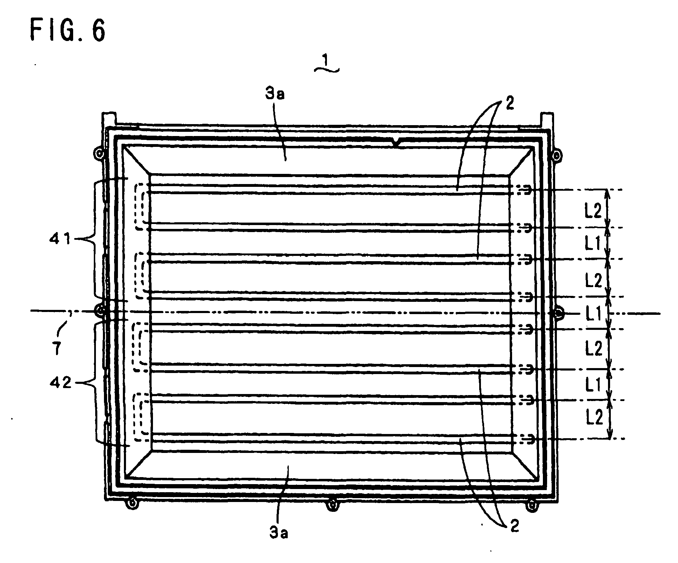

Next, referring to FIG. 6, a backlight unit according to the preferred embodiment of the present invention will be described. FIG 6 is a plan view of a backlight unit according to the preferred embodiment of the present invention before being mounted on a liquid crystal panel. In FIG. 6, like parts as in the backlight unit of the first example are designated by like reference numerals. The backlight unit 1 of the preferred embodiment uses four U-shaped Cold Cathode Fluorescent Lamps 2 similar to those of the backlight unit 1 of the first example. As shown in FIG. 6, these four U-shaped Cold Cathode Fluorescent Lamps 2 can be divided into an upper set 41 of two U-shaped Cold Cathode Fluorescent Lamps 2 and a lower set 42 of two U-shaped Cold Cathode Fluorescent Lamps 2.

These two sets 41 and 42 are respectively placed symmetrically up and down with respect to a transverse plane (cross-sectional plane corresponding to a line 7 in FIG. 6), as a plane of symmetry, passing through substantially a center in the vertical direction of the display screen of the liquid crystal panel 5 (refer to FIG 2). They are mounted in the backlight unit 1 in a manner that the mounting distance (mounting pitch) L1 between the upper set 41 of two U-shaped Cold Cathode Fluorescent Lamps and the lower set 42 of two U-shaped Cold Cathode Fluorescent Lamps (i.e. center-to-center distance between adjacent parallel tube segments, one of which is a tube segment, closest to the lower set 42, of a U-shaped Cold Cathode Fluorescent Lamp 2 in the upper set 41, and the other of which is a tube segment, closest to the upper set 41, of a U-shaped Cold Cathode Fluorescent Lamp 2 in the lower set 42) is shorter than the center-to-center distance L2 between parallel tube segments in each U-shaped Cold Cathode Fluorescent Lamp 2. Thus, the mounting pitch of the U-shaped Cold Cathode Fluorescent Lamps 2 at a central portion in the vertical direction of the display screen is shorter than the center-to-center distance between parallel tube segments in each U-shaped Cold Cathode Fluorescent Lamp 2. Besides, note that as shown in FIG. 6, the mounting pitch between the two U-shaped Cold Cathode Fluorescent Lamps 2 in each of the sets 41 and 42 is also L1, that is the same as the mounting pitch L1 between the upper set 41 and the lower set 42.

As described above, in the backlight unit of the preferred embodiment, the mounting pitch L1 between the upper set 41 of two U-shaped Cold Cathode Fluorescent Lamps and the lower set 42 of two U-shaped Cold Cathode Fluorescent Lamps is shorter than the center-to-center distance L2 between parallel tube segments in each U-shaped Cold Cathode Fluorescent Lamp 2. Thereby, the backlight unit 1 of the preferred embodiment can secure practical brightness at a central portion in the vertical direction of a display screen by using four U-shaped Cold Cathode Fluorescent Lamps 2, not only in the case of 15 inch liquid crystal television, but also in the case of 16 inch or larger liquid crystal television. Thereby, the backlight unit 1 can reduce the number of Cold Cathode Fluorescent Lamps and the number of accompanying components, thereby reducing the cost of the entire backlight unit and improving the work efficiency in assembling the backlight unit.

It is to be noted that the present invention is not limited to the structures or configurations of the above embodiments, and various modifications are possible. For example, in the first and second examples, two U-shaped Cold Cathode Fluorescent Lamps 2 and two S-shaped Cold Cathode Fluorescent Lamps 12 are used, respectively. However, instead, it is possible to use four straight tube type Cold Cathode Fluorescent Lamps and six straight tube type Cold Cathode Fluorescent Lamps, respectively. Furthermore, in the case where the present invention is to be applied to a backlight unit 1 for a 16 inch or larger liquid crystal television, it is not required that the interior angle *θ* between the liquid crystal panel and each side plate of the reflector plate, when mounted on the liquid crystal panel, be in a range from 30 to 60 degrees.

This application is based on Japanese patent application 2004-103457 filed March 31, 2004, the contents of which are hereby incorporated by reference.

The present invention has been described above using a presently preferred embodiments and examples, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the scope of the present invention.

## Claims

1. A direct type backlight unit (1) for a liquid crystal television, comprising:
a plurality of U-shaped Cold Cathode Fluorescent Lamps (2) to illuminate a liquid crystal panel (5) for a liquid crystal television from behind; and
a reflector plate (3) placed behind the U-shaped Cold Cathode Fluorescent Lamps to reflect light from the U-shaped Cold Cathode Fluorescent Lamps, wherein the U-shaped Cold Cathode Fluorescent Lamps (2) are respectively placed symmetrically up and down with respect to a transverse plane, as a plane of symmetry, passing through substantially a center in the vertical direction of a display screen of the liquid crystal panel (5), said transverse plane defining a lower set (42) and an upper set (41) of U-shaped Cold Cathode Fluorescent Lamps,
**characterized in that**
the U-shaped Cold Cathode Fluorescent Lamps (2) are mounted in the backlight unit in a manner that the mounting pitch between two U-shaped Cold Cathode Fluorescent Lamps (2) at a central portion in the vertical direction of the display screen is shorter than the center-to-center distance between parallel tube segments in each U-shaped Cold Cathode Fluorescent Lamp, and
the mounting pitch between two adjacent U-shaped Cold Cathode Fluorescent Lamps (2) in the upper set and the lower set (41, 42) of U-shaped Cold Cathode Fluorescent Lamps (2) is the same as the mounting pitch between the upper (41) and lower (42) set.

2. The direct type backlight unit for a liquid crystal television according to claim 1, wherein the reflector plate (3) has at each side thereof a side plate (3a) which, when mounted on the liquid crystal panel (5), forms an interior angle of 30 to 60 degrees with the liquid crystal panel (5).

3. The direct type backlight unit for a liquid crystal television according to claim 1, wherein the number of the plurality of U-shaped Cold Cathode Fluorescent Lamps is four.

## Patentansprüche

1. Direktrückbeleuchtungseinheit (1) für einen Flüssigkristallfernseher, umfassend:
mehrere U-förmige Kaltkathodenleuchtstofflampen (2) zum Beleuchten eines Flüssigkristallelements (5) für einen Flüssigkristallfernseher von hinten; und
eine Reflektorplatte (3), die hinter den U-förmigen Kaltkathodenleuchtstofflampen angeordnet ist, um Licht von den U-förmigen Kaltkathodenleuchtstofflampen zu reflektieren, wobei die U-förmigen Kaltkathodenleuchtstofflampen (2) jeweils oberhalb und unterhalb in Bezug auf eine Horizontalebene symmetrisch angeordnet sind, wobei die Horizontalebene als Symmetrieebene dient, die im Wesentlichen durch eine Mitte, in vertikaler Richtung, eines Bildschirms der Flüssigkristallwand (5) verläuft, wobei die Horizontalebene einen unteren Satz (42) und einen oberen Satz (41) U-förmiger Kaltkathodenleuchtstofflampen definiert,
**dadurch gekennzeichnet, dass**
die U-förmigen Kaltkathodenleuchtstofflampen (2) derart in die Rückbeleuchtungseinheit eingebaut sind, dass der Befestigungsabstand zwischen zwei U-förmigen Kaltkathodenleuchtstofflampen (2) in einem mittleren Bereich, in vertikaler Richtung, des Bildschirms kürzer ist als der Mittenabstand zwischen parallelen Röhrenabschnitten in jeder U-förmigen Kaltkathodenleuchtstofflampe, und
der Befestigungsabstand zwischen zwei benachbarten U-förmigen Kaltkathodenleuchtstofflampen (2) in dem oberen Satz und dem unteren Satz (41, 42) U-förmiger Kaltkathodenleuchtstofflampen (2) gleich dem Befestigungsabstand zwischen dem unteren (41) und dem oberen Satz (42) ist.

2. Direktrückbeleuchtungseinheit für einen Flüssigkristallfernseher gemäß Anspruch 1, wobei die Reflektorplatte ( 3) an jeder Seite davon eine Seitenplatte (3a) aufweist, die bei Befestigung an das Flüssigkristallelement (5) einen Innenwinkel von 30° bis 60° mit dem Flüssigkristallelement (5) bildet.

3. Direktrückbeleuchtungseinheit für einen Flüssigkristallfernseher gemäß Anspruch 1, wobei die Anzahl der mehreren U-förmigen Kaltkathodenleuchtstofflampen vier ist.

## Revendications

1. Unité de rétroéclairage de type direct (1) pour une télévision à cristaux liquides, comprenant :
une pluralité de lampes fluorescentes à cathode froide en forme de U (2) pour éclairer par l'arrière un panneau à cristaux liquides (5) pour une télévision à cristaux liquides ; et
une plaque de réflecteur (3) placée à l'arrière des lampes fluorescentes à cathode froide en forme de U pour réfléchir la lumière provenant des lampes fluorescentes à cathode froide en forme de U, dans laquelle les lampes fluorescentes à cathode froide en forme de U (2) sont respectivement placées symétriquement en haut et en bas par rapport à un plan transversal, tel qu'un plan de symétrie, traversant sensiblement un centre dans la direction verticale d'un écran du panneau à cristaux liquides (5), ledit plan transversal définissant un jeu inférieur (42) et un jeu supérieur (41) de lampes fluorescentes à cathode froide en forme de U,
**caractérisée en ce que** les lampes fluorescentes à cathode froide en forme de U (2) sont montées dans l'unité de rétroéclairage de sorte que le pas de montage entre deux lampes fluorescentes à cathode froide en forme de U (2) au niveau d'une portion centrale dans la direction verticale de l'écran est plus petite que la distance de centre à centre entre des segments de tube parallèles dans chaque lampe fluorescente à cathode froide en forme de U, et
**en ce que** le pas de montage entre deux lampes fluorescentes à cathode froide en forme de U (2) adjacentes dans le jeu supérieur et le jeu inférieur (41, 42) de lampes fluorescentes à cathode froide en forme de U (2) est identique au pas de montage entre les jeux supérieur (41) et inférieur (42).

2. Unité de rétroéclairage de type direct pour une télévision à cristaux liquides selon la revendication 1, dans laquelle la plaque de réflecteur (3) comporte au niveau de chacun de ses côtés une plaque latérale (3a) qui, lorsqu'elle est montée sur le panneau à cristaux liquides (5), forme un angle intérieur de 30 à 60 degrés avec le panneau à cristaux liquides (5).

3. Unité de rétroéclairage de type direct pour une télévision à cristaux liquides selon la revendication 1, dans laquelle le nombre de la pluralité de lampes fluorescentes à cathode froide en forme de U est de quatre.
